# EUROPÄISCHE PATENTSCHRIFT

(11) **EP 3 033 533 B1**
(45) Veröffentlichungstag und Bekanntmachung des Hinweises auf die Patenterteilung: **30.01.2019**
(21) Anmeldenummer: 14742154.9
(22) Anmeldetag: 22.07.2014
(51) Int. Cl.: F16B 25/00

(54) **BETONSCHRAUBE**
CONCRETE SCREW
VIS À BÉTON

(30) Priorität: 13.08.2013 DE 102013108743
(43) Veröffentlichungstag der Anmeldung: 22.06.2016
(73) Patentinhaber: fischerwerke GmbH & Co. KG, 72178 Waldachtal (DE)
(72) Erfinder: WEICHERT, Berthold, 78656 Zimmern (DE)
(74) Vertreter: Lehmann, David
(86) Internationale Anmeldenummer: PCT/EP2014/002006
(87) Internationale Veröffentlichungsnummer: WO 2015/022049

(56) Entgegenhaltungen:
- EP-A2- 1 001 178
- WO-A1-99/05421
- WO-A1-2012/084386

## Beschreibung

Die Erfindung betrifft eine Betonschraube mit den Merkmalen des Oberbegriffs des Anspruchs 1.

Als Betonschrauben werden Schrauben verstanden, die in ein vorgebohrtes Loch in Beton eingeschraubt werden können. Sie schneiden sich dabei ihr Gewinde selbst, weshalb dieses zumindest teilweise sehr hart sein muss.

Eine gattungsgemäße Betonschraube ist aus dem Dokument WO 2012/084386 A1 bekannt. Diese Betonschraube weist einen Gewindeabschnitt, mit einem über mehr als die Hälfte der Länge konstanten mittleren Kerndurchmesser, einen gewindefreien Schaftabschnitt und einen als Außensechskant ausgebildeten Schraubenkopf als Werkzeugangriffsmittel auf.

Bei Betonschrauben, die nicht aus rostfreiem Stahl sind, besteht die Gefahr der Wasserstoffversprödung. So kann durch Oberflächenbehandlungen, wie dem Beizen, Wasserstoff in atomarer Form in die Randschicht der Betonschrauben eindiffundieren. Insbesondere bei hohen Festigkeiten ab 1000 N/mm² kann es unter Belastung durch eine Konzentrationswirkung des Wasserstoffs in Gebieten mit hoher Spannung zu einem verzögerten Sprödbruch kommen. Insbesondere bei einem Schrägzug, wie er bei den entsprechenden Zulassungsversuchen für Betonschrauben nach ETAG vorgeschrieben ist, kann dies zum Versagen führen. Dem wurde bisher mit Hilfe nicht-elektrolytisch aufgebrachter Beschichtungen, wie Zinklamellenüberzügen, begegnet. Alternativ kann durch eine induktive Härtung versucht werden, gezielt nur die Spitze und das Gewinde zu härten, so dass im Bereich des Übergangs vom Gewinde zum Schaft, der besonders gefährdet für einen wasserstoffinduzierten Sprödbruch ist, die Festigkeit deutlich unter 1000 N/mm² bleibt.

Aufgabe der Erfindung ist, eine Betonschraube mit verminderter Neigung zum Versagen durch Wasserstoffversprödung vorzuschlagen.

Diese Aufgabe wird erfindungsgemäß durch eine Betonschraube mit den Merkmalen des Anspruchs 1 gelöst.

Unter einer Betonschraube wird hier eine Schraube ohne Bohrspitze verstanden, die in ein vorgebohrtes Loch in mineralischen Untergründen, insbesondere Beton, einschraubbar ist Eine Betonschraube schneidet sich dabei ihr Gewinde selbst, wozu dieses zumindest lokal eine Härte von über 50 HRC, insbesondere über 55 HRC und vorzugsweise über 58 HRC, aufweist. Betonschrauben haben insbesondere einen Mindestnenndurchmesser von 6 mm. Der mittlere Kerndurchmesser beträgt dabei mindestens 5,5 mm und der Außendurchmesser des Gewindes mindestens 7,5 mm. Die Schraubenspitze ist kurz, insbesondere weniger als 20 % der Länge des Gewindeabschnitts lang, und außerdem insbesondere stumpf. Die Betonschraube bildet zusammen mit dem Untergrund eine Befestigungsanordnung. Vorzugsweise ist die Betonschraube in einem mineralischen Untergrund, insbesondere aus Beton, verankert.

Die erfindungsgemäße Betonschraube weist einen Gewindeabschnitt mit einem über mindestens die Hälfte der Länge im Wesentlichen konstanten mittleren Kerndurchmesser auf. "Mittlerer Kerndurchmesser" bezieht sich hier auf den in Längsrichtung der Betonschraube gesehenen mittleren Bereich des Gewindes. Das Gewinde kann dabei ein- oder mehrgängig sein. Bei einem mehrgängigen Gewinde kann der Kerndurchmesser zwischen den Gewindegängen unterschiedlich sein. Hier gibt es dementsprechend erfindungsgemäß zwei oder mehrere mittlere Kerndurchmesser, die aber wiederum über mindestens die Hälfte der Länge im Wesentlichen konstant sind. Außerdem weist die erfindungsgemäße Betonschraube einen gewindefreien Schaftabschnitt auf, wobei dieser deutlich länger, aber auch deutlich kürzer als der Gewindeabschnitt sein kann. Ein Werkzeugangriffsmittel, insbesondere ein Außensechskant, dient dem Ansetzen eines Werkzeugs, mit dem die Betonschraube in den Untergrund eingeschraubt werden kann.

Gekennzeichnet ist die erfindungsgemäße Betonschraube dadurch, dass der Gewindeabschnitt einen Übergangsbereich aufweist, der an den Schaftabschnitt angrenzt. Dieser Übergangsbereich ist mindestens eine halbe Gewindesteigung lang, insbesondere mindestens eine und vorzugsweise mindestens zwei Gewindesteigungen lang. Über die Länge dieses Übergangsbereichs steigt der Kerndurchmesser vom mittleren Kerndurchmesser in Richtung des Schaftabschnitts auf den Durchmesser des Schaftabschnitts an. Der Anstieg erfolgt dabei stetig und insbesondere, aber nicht notwendigerweise, linear. Durch diese Gestaltung hat sich überraschenderweise gezeigt, dass die wasserstoffinduzierte Sprödbruchneigung reduziert werden kann, was vermutlich auf den bisher üblichen, stufenartigen Übergang vom Kerndurchmesser zum Schaftdurchmesser zurückzuführen ist.

Vorzugsweise fällt in dem Übergangsbereich des Gewindeabschnitts, insbesondere im Wesentlichen über die gesamte Länge des Übergangsbereichs, der Außendurchmesser des Gewindes in Richtung des Schaftabschnitts auf den Durchmesser des Schaftabschnitts ab. Ohne den Erfindungsgedanken zu verlassen, kann der Abfall des Durchmessers auf eine Länge über den Übergangsbereich hinaus erfolgen. Das Gewinde läuft jedoch insbesondere über zwei Umdrehungen aus. Der Abfall erfolgt dabei stetig und insbesondere, aber nicht notwendigerweise, linear. Zusammen mit dem Anstieg des Kerndurchmessers führt dies zu einem sanften Übergang vom mittleren Teil des Gewindeabschnitts zum Schaftabschnitt. Hierdurch werden einerseits Kanten und Kerben im Bereich der höchsten Belastung bei Schrägzug reduziert und somit Spannungsspitzen vermieden. Andererseits verbleibt das Gefüge, welches beim Rollen des Gewindes stark verformt wird, in dem Übergangsbereich vergleichsweise homogen. Die Sprödbruchneigung wird somit verringert.

Um Sprödbruch aufgrund von Kerbwirkungen zu vermeiden, schlägt die Erfindung außerdem vor, dass der Flankenfuß des Gewindes abgerundet ist. Hierdurch wird eine Kerbe und ein inhomogenes Gefüge am Übergang von Gewindeflanke zum Kerndurchmesser vermieden, wobei insbesondere die dem Schaftabschnitt zugewandte Seite von Bedeutung ist. Auch hierdurch wird die Sprödbruchneigung verringert.

Vorzugsweise ist die Flankenspitze des Gewindes abgerundet, wodurch ein inhomogenes Gefüge mit der Neigung zu Sprödbruch vermieden wird.

Die erfindungsgemäße Betonschraube weist vorzugsweise ein Verhältnis von Gewindesteigung zu Außendurchmesser des Gewindes größer als 0,5, insbesondere größer als 0,6 und vorzugsweise größer als 0,7, auf. Hierdurch wird ein gutes Verhältnis aus aufzubringendem Drehmoment, Vortrieb und Haltewerten der Betonschraube erreicht.

Vorzugsweise weist die Betonschraube außerdem im Bereich des Gewindes ein Verhältnis von Außendurchmesser zu Kerndurchmesser von kleiner als 1,55, insbesondere kleiner als 1,45 auf. Auch dies begünstigt das Verhältnis aus aufzubringendem Drehmoment, Vortrieb und Haltewerten der Betonschraube.

Die Erfindung wird nachfolgend anhand eines Ausführungsbeispiels erläutert.

Es zeigen:
- Figur 1: einen Längsschnitt durch eine Befestigungsanordnung mit der erfindungsgemäßen Betonschraube; und
- Figur 2: eine vergrößerte Schnittdarstellung des Übergangsbereichs der Betonschraube gemäß Ausschnitt II in Figur 1.

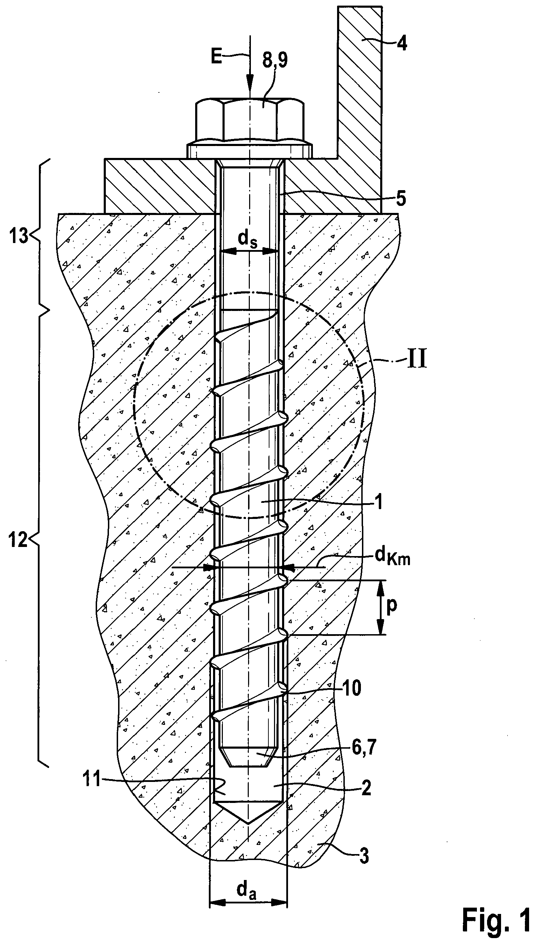

Die in den Zeichnungen dargestellte, erfindungsgemäße gewindeschneidende Betonschraube 1 ist zum Einschrauben in ein vorgebohrtes Bohrloch 2 in einen Untergrund 3 aus Beton, Mauerwerk oder einem anderen mineralischen Werkstoff vorgesehen. Die Betonschraube 1 wird ohne Verwendung eines Dübels oder sonstigen Hilfsmittels in das Bohrloch 2 eingeschraubt, schneidet sich dabei selbst ein Innengewinde in den Untergrund 3 und dient der Befestigung eines Gegenstands 4 in Form einer winkelförmigen Konsole aus Stahl. Dazu wird die Betonschraube 1 vor dem Einschrauben in den Untergrund 3 durch ein Durchgangsloch 5 des Gegenstands 4 hindurchgesteckt. Figur 1 zeigt den vollständig verankerten Zustand. Die Betonschraube 1 bildet zusammen mit dem Untergrund 3 eine Befestigungsanordnung.

Die Betonschraube 1 weist eine kegelstumpfförmige Verjüngung 6 an einem in Einbringrichtung E vorderen Schraubenende 7 und ein Werkzeugangriffsmittel 8 an einem hinteren Schraubenende 9 auf. Im dargestellten Ausführungsbeispiel ist das Werkzeugangriffsmittel 8 ein Außensechskant, diese Kopfform ist nicht zwingend.

Die Betonschraube 1 weist ein Gewinde 10 auf. Ein Außendurchmesser dₐ des Gewindes 10 ist so groß, dass es sich beim Einschrauben der Betonschraube 1 in das Bohrloch 2 in eine Bohrlochwand 11 einschneidet. Das Verhältnis des Außendurchmessers dₐ zu einem mittleren Kerndurchmesser d_{Km} des Gewindes 10 beträgt 1,4 und das Verhältnis von Gewindesteigung p zu Außendurchmesser dₐ des Gewindes 10 beträgt 0,72. Mit dem mittleren Kerndurchmesser d_{Km} ist der Kerndurchmesser im mittleren Bereich des Gewindes 10 gemeint. Da die Verjüngung 6 sehr kurz ist, weist das Gewinde 10 über weite Teile den mittleren Kerndurchmesser d_{Km} auf.

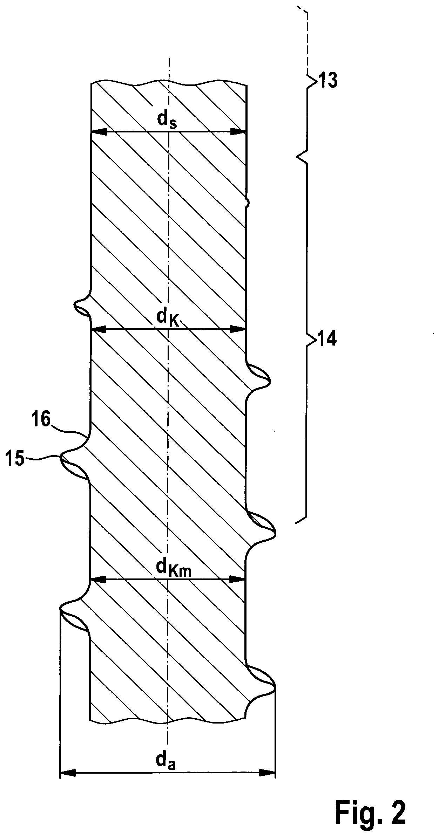

Der Abschnitt mit dem Gewinde 10 bildet einen Gewindeabschnitt 12 der Betonschraube 1. Zwischen Gewindeabschnitt 12 und Werkzeugangriffsmittel 8 ist ein zylindrischer Schaftabschnitt 13 mit konstantem Durchmesser dₛ angeordnet. Über eine Länge, die der doppelten Gewindesteigung p entspricht, bildet der dem Schaftabschnitt 13 zugewandte Teil des Gewindeabschnitts 12 einen Übergangsbereich 14 (Figur 2). In diesem Übergangsbereich 14 steigt in Richtung des hinteren Schraubenendes 9 der Kerndurchmesser d_{K} des Gewindes 10 linear vom mittleren Kerndurchmesser d_{Km} auf den Durchmesser dₛ des Schaftabschnitts 13 an. Außerdem fällt im Übergangsbereich 14 in Richtung des hinteren Schraubenendes 9 der Außendurchmesser dₐ des Gewindes 10 linear auf den Durchmesser dₛ des Schaftabschnitts 13 ab.

In der vergrößerten Darstellung von Figur 2 wird außerdem deutlich, dass eine Flankenspitze 15 des Gewindes 10 abgerundet ist. Auch ein Flankenfuß 16 ist am Übergang zu dem Bereich mit Kerndurchmesser d_{K} abgerundet, und zwar sowohl auf der zum vorderen als auch zum hinteren Schraubenende 7, 8 gewandten Seite.

Durch die Gestaltung des Übergangsbereichs 14 sowie der Flankenspitze 15 und dem Flankenfuß 16 wird erreicht, dass im Übergangsbereich 14 ein relativ homogenes Gefüge erreicht und Kerbwirkungen vermieden werden. Hierdurch wird die Neigung zum wasserstoffinduzierten Sprödbruchversagen gegenüber bekannten Betonschrauben reduziert.

### Bezuaszeichenliste

- 1: Betonschraube
- 2: Bohrloch
- 3: Untergrund
- 4: Gegenstand
- 5: Durchgangsloch des Gegenstands 4
- 6: Verjüngung
- 7: vorderes Schraubenende
- 8: Werkzeugangriffsmittel
- 9: hinteres Schraubenende
- 10: Gewinde
- 11: Bohrlochwand
- 12: Gewindeabschnitt
- 13: Schaftabschnitt
- 14: Übergangsbereich
- 15: Flankenspitze
- 16: Flankenfuß
- dₐ: Außendurchmesser des Gewindes 10
- d_{K}: Kerndurchmesser des Gewindes 10
- d_{Km}: mittlerer Kerndurchmesser des Gewindes 10
- dₛ: Durchmesser des Schaftabschnitts 13
- E: Einbringrichtung
- p: Gewindesteigung

## Patentansprüche

1. Betonschraube (1), mit einem Gewindeabschnitt (12) mit einem über mindestens die Hälfte der Länge im Wesentlichen konstanten mittleren Kerndurchmesser d_{Km}, einem gewindenfreien Schaftabschnitt (13) und einem Werkzeugangriffsmittel (8), insbesondere einem Außensechskant, **dadurch gekennzeichnet, dass** in einem an den Schaftabschnitt (13) angrenzenden Übergangsbereich (14) des Gewindeabschnitts (12) über eine Länge, die mindestens der halben Gewindesteigung (p), insbesondere mindestens der Gewindesteigung (p) und vorzugsweise mindestens der doppelten Gewindesteigung (p) entspricht, der Kerndurchmesser d_{K} vom mittleren Kerndurchmesser d_{Km} in Richtung des Schaftabschnitts (13) auf den Durchmesser dₛ des Schaftabschnitts (13) ansteigt.

2. Betonschraube nach Anspruch 1, **dadurch gekennzeichnet, dass** in dem Übergangsbereich (14) des Gewindeabschnitts (12) oder darüber hinaus, insbesondere im Wesentlichen über die gesamte Länge des Übergangsbereichs (14), der Außendurchmesser dₐ des Gewindes in Richtung des Schaftabschnitts (13) auf den Durchmesser dₛ des Schaftabschnitts (13) abfällt.

3. Betonschraube nach einem der vorstehenden Ansprüche, **dadurch gekennzeichnet, dass** der Flankenfuß (16) des Gewindes (10) abgerundet ist.

4. Betonschraube nach einem der vorstehenden Ansprüche, **dadurch gekennzeichnet, dass** die Flankenspitze (15) des Gewindes (10) abgerundet ist.

5. Betonschraube nach einem der vorstehenden Ansprüche, **dadurch gekennzeichnet, dass** das Verhältnis von Gewindesteigung p zu Außendurchmesser dₐ des Gewindes (10) im Bereich des konstanten mittleren Kerndurchmessers größer als 0,5, insbesondere größer als 0,6 und vorzugsweise größer als 0,7, ist.

6. Betonschraube nach einem der vorstehenden Ansprüche, **dadurch gekennzeichnet, dass** im Bereich des konstanten mittleren Kerndurchmessers d_{Km} das Verhältnis von Außendurchmesser dₐ des Gewindes (10) zum Kerndurchmesser d_{Km} kleiner als 1,55, insbesondere kleiner als 1,45 ist.

7. Befestigungsanordnung mit einer Betonschraube (1) nach einem der vorstehenden Ansprüche und mit einem mineralischen Untergrund (3), insbesondere aus Beton, in dem die Betonschraube (1) verankert ist.

## Claims

1. Concrete screw (1), having a threaded portion (12) with a central core diameter d_{Km} that is substantially constant over at least half of the length, a thread-free shank portion (13) and a tool-application means (8), especially a hexagonal head, **characterised in that** in a transition region (14) of the threaded portion (12) which is adjacent to the shank portion (13), over a length that corresponds to at least half the thread pitch (p), especially at least the thread pitch (p) and preferably at least twice the thread pitch (p), the core diameter d_{K} increases from the central core diameter d_{Km} in the direction of the shank portion (13) to the diameter dₛ of the shank portion (13).

2. Concrete screw according to claim 1, **characterised in that** in the transition region (14) of the threaded portion (12) or beyond, especially over substantially the entire length of the transition region (14), the external diameter dₐ of the thread decreases in the direction of the shank portion (13) to the diameter dₛ of the shank portion (13).

3. Concrete screw according to either one of the preceding claims, **characterised in that** the flank foot (16) of the thread (10) is rounded.

4. Concrete screw according to any one of the preceding claims, **characterised in that** the flank tip (15) of the thread (10) is rounded.

5. Concrete screw according to any one of the preceding claims, **characterised in that** the ratio of the thread pitch p to the external diameter dₐ of the thread (10) in the region of the constant central core diameter is greater than 0.5, especially greater than 0.6 and preferably greater than 0.7.

6. Concrete screw according to any one of the preceding claims, **characterised in that** in the region of the constant central core diameter d_{Km} the ratio of the external diameter dₐ of the thread (10) to the core diameter d_{Km} is less than 1.55, especially less than 1.45.

7. Fixing arrangement having a concrete screw (1) according to any one of the preceding claims and having a mineral substrate (3), especially made of concrete, in which the concrete screw (1) is anchored.

## Revendications

1. Vis à béton (1), avec un tronçon fileté (12) ayant un diamètre moyen d'âme d_{Km} sensiblement constant sur au moins la moitié de la longueur, avec un tronçon de tige (13) dépourvu de filetage et avec un moyen (8) de prise d'outil, en particulier un six pans mâle, **caractérisée en ce que**, dans une région de transition (14) du tronçon fileté (12) qui est limitrophe du tronçon de tige (13), sur une longueur qui correspond au moins à la moitié du pas de filetage (p), en particulier au moins au pas de filetage (p) et de préférence au moins au double du pas de filetage (p), le diamètre d'âme d_{K} augmente depuis le diamètre moyen d'âme d_{Km} en direction du tronçon de tige (13) jusqu'à atteindre le diamètre dₛ du tronçon de tige (13).

2. Vis à béton selon la revendication 1, **caractérisée en ce que**, dans la région de transition (14) du tronçon fileté (12) ou au-delà, en particulier sensiblement sur toute la longueur de la région de transition (14), le diamètre extérieur dₐ du filetage diminue en direction du tronçon de tige (13) jusqu'à atteindre le diamètre dₛ du tronçon de tige (13).

3. Vis à béton selon l'une des revendications précédentes, **caractérisée en ce que** le pied de flanc (16) du filetage (10) est arrondi.

4. Vis à béton selon l'une des revendications précédentes, **caractérisée en ce que** le sommet de flanc (15) du filetage (10) est arrondi.

5. Vis à béton selon l'une des revendications précédentes, **caractérisée en ce que** le rapport du pas de filetage (p) au diamètre extérieur da du filetage (10) dans la région du diamètre moyen constant d'âme est supérieur à 0,5, en particulier supérieur à 0,6, de préférence supérieur à 0,7.

6. Vis à béton selon l'une des revendications précédentes, **caractérisée en ce que**, dans la région du diamètre moyen constant d'âme d_{Km}, le rapport du diamètre extérieur dₐ du filetage (10) au diamètre d'âme d_{Km} est inférieur à 1,55, en particulier inférieur à 1,45.

7. Système de fixation avec une vis à béton (1) selon l'une des revendications précédentes et avec un support minéral (3), en particulier en béton, dans lequel la vis à béton (1) est ancrée.
